(19) Europäisches Patentamt
European Patent Office
Office européen des brevets

(11) **EP 4 378 889 A1**

(12) **EUROPEAN PATENT APPLICATION**
published in accordance with Art. 153(4) EPC

(43) Date of publication:
**05.06.2024 Bulletin 2024/23**

(21) Application number: **22849390.4**

(22) Date of filing: **22.07.2022**

(51) International Patent Classification (IPC):
***C01B 32/00*** (2017.01)   ***C01B 32/05*** (2017.01)
***H01M 4/587*** (2010.01)

(52) Cooperative Patent Classification (CPC):
**C01B 32/00; C01B 32/05; H01M 4/587; Y02E 60/10**

(86) International application number:
**PCT/JP2022/028462**

(87) International publication number:
**WO 2023/008328 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.07.2021 JP 2021125189**

(71) Applicant: **Kuraray Co., Ltd.
Kurashiki-shi, Okayama 710-0801 (JP)**

(72) Inventors:
• **KANNO, Momotaro
Kurashiki-shi, Okayama 710-0801 (JP)**
• **NISHIUMI, Kosuke
Kurashiki-shi, Okayama 710-0801 (JP)**
• **NISHIMURA, Keiichi
Kurashiki-shi, Okayama 710-0801 (JP)**

(74) Representative: **Müller-Boré & Partner
Patentanwälte PartG mbB
Friedenheimer Brücke 21
80639 München (DE)**

(54) **CARBONACEOUS MATERIAL, NEGATIVE ELECTRODE FOR POWER STORAGE DEVICES, POWER STORAGE DEVICE, AND METHOD FOR PRODUCING CARBONACEOUS MATERIAL**

(57) The present invention relates to a carbonaceous material having a nitrogen element content determined by elemental analysis of 1.0% by mass or more, a true density determined by a butanol immersion method of 1.50 to 1.65 g/cc, a tapped bulk density of 0.7 to 1.0 g/cc, and a carbon interplanar spacing ($d_{002}$) measured by X-ray diffraction of 3.65 Å or more.

EP 4 378 889 A1

## Description

TECHNICAL FIELD

The present invention relates to a carbonaceous material, a negative electrode for a power storage device, a power storage device, and a method for producing a carbonaceous material.

BACKGROUND ART

Power storage devices are devices utilizing electrochemical phenomena such as secondary batteries and capacitors, and are widely used. For example, a lithium ion secondary battery, which is one of power storage devices, is widely used in small portable devices such as mobile phones and laptop computers. As a negative electrode material of a lithium ion secondary battery, non-graphitizable carbon capable of doping (charging) and dedoping (discharging) lithium in an amount exceeding 372 mAh/g, which is a theoretical capacity of graphite, has been developed and used (for example, Patent Document 1).

Non-graphitizable carbon can be obtained using, for example, petroleum pitch, coal pitch, a phenolic resin, or a plant as a carbon source. Among these carbon sources, plant-derived raw materials such as sugar compounds are attracting attention because they are raw materials that can be continuously and stably supplied by cultivation and can be obtained at low cost. In addition, a carbonaceous material obtained by calcining a plant-derived carbon raw material is expected to have a good charge/discharge capacity because it has many pores (for example, Patent Documents 1 and 2).

In addition, as a carbonaceous material that can be used as a negative electrode of a power storage device such as a nonaqueous electrolyte secondary battery, a carbonaceous material in which the true density, the atomic ratio of hydrogen atoms to carbon atoms determined by elemental analysis, the average particle diameter, Dv90/Dv10, and the degree of circularity are adjusted to prescribed ranges (Patent Document 2), carbonaceous materials in which the nitrogen element content, the oxygen content, and the hydrogen element content are adjusted to prescribed amounts and proportions (Patent Documents 3 and 4), and a carbonaceous material in which the tapped density and the angle of repose are adjusted to prescribed ranges (Patent Document 5) are known.

PRIOR ART DOCUMENTS

PATENT DOCUMENTS

Patent Document 1: JP-A-2006-083012
Patent Document 2: WO 2013/118757 A
Patent Document 3: WO 2019/009332 A
Patent Document 4: WO 2019/009333 A
Patent Document 5: JP-A-2012-533864

SUMMARY OF THE INVENTION

PROBLEMS TO BE SOLVED BY THE INVENTION

In various applications of a power storage device using a carbonaceous material as a negative electrode material, an increased energy density of the negative electrode in the device is required. As one means for increasing the energy density, it is conceivable to increase both the discharge capacity per unit weight and the discharge capacity per unit volume, but it has been difficult to provide a carbonaceous material that achieves such characteristics.

Accordingly, an object of the present invention is to provide a carbonaceous material capable of providing a power storage device having both a high discharge capacity per unit weight and a high discharge capacity per unit volume when applied as a negative electrode layer. Another object of the present invention is to provide a negative electrode for a power storage device comprising such a carbonaceous material, and a power storage device comprising such a negative electrode for a power storage device.

SOLUTIONS TO PROBLEMS

As a result of intensive studies by the present inventors, it has been found that a carbonaceous material suitable for a power storage device having both a high discharge capacity per unit weight and a high discharge capacity per unit volume can be obtained by adjusting the nitrogen element content, the true density, the tapped bulk density, and the carbon interplanar spacing ($d_{002}$) measured by X-ray diffraction in the carbonaceous material within prescribed ranges.

That is, the present invention includes the following preferred aspects.

[1] A carbonaceous material having a nitrogen element content determined by elemental analysis of 1.0% by mass or more, a true density determined by a butanol immersion method of 1.50 to 1.65 g/cc, a tapped bulk density of 0.7 to 1.0 g/cc, and a carbon interplanar spacing ($d_{002}$) measured by X-ray diffraction of 3.65 Å or more.

[2] The carbonaceous material according to [1], wherein a ratio of $D_{80}$ to $D_{20}$ in a volume-based particle size distribution determined by a laser diffraction scattering particle size distribution measurement method, $D_{20}/D_{80}$, is 3.5 to 20.

[3] The carbonaceous material according to [1] or [2], wherein a degree of circularity measured for particles with which a circle corresponding to a projected area determined with a flow type particle image analyzer is 5 $\mu$m or more is 0.70 or more.

[4] The carbonaceous material according to any one of [1] to [3], wherein in a Raman spectrum observed by laser Raman spectroscopy, a value of a half width of a peak around 1360 cm$^{-1}$ is 240 cm$^{-1}$ or more.

[5] The carbonaceous material according to any one of [1] to [4], wherein in a Raman spectrum observed by laser Raman spectroscopy, a value of a half width of a peak around 1650 cm$^{-1}$ is 98 cm$^{-1}$ or more.

[6] The carbonaceous material according to any one of [1] to [5], which is a carbonaceous material for a negative electrode of a power storage device.

[7] A negative electrode for a power storage device, comprising the carbonaceous material according to any one of [1] to [6].

[8] A power storage device comprising the negative electrode for a power storage device according to [7].

[9] A method for producing the carbonaceous material according to any one of [1] to [6], the method comprising at least the following steps:

(1) a step of mixing a compound having a saccharide skeleton, a nitrogen-containing compound, and a crosslinking agent to obtain a mixture;
(2) a step of subjecting the mixture to heat treatment at 500 to 900°C in an inert gas atmosphere to obtain a char;
(3) a step of pulverizing and/or classifying the char; and
(4) a step of subjecting the char pulverized and/or classified to heat treatment at 800 to 1600°C in an inert gas atmosphere to obtain a carbonaceous material.

[10] The method for producing a carbonaceous material according to [9], wherein the compound having a saccharide skeleton is a compound with which in an image obtained by observing cross sections of particles of the compound with a secondary electron microscope, when 20 particles having a cross-sectional area of 3 $\mu$m$^2$ or more and 100 $\mu$m$^2$ or less are randomly selected, the number of particles having a void of 1 $\mu$m$^2$ or more is 3 or less.

[11] The method for producing a carbonaceous material according to [9], further comprising a step (A) of gelatinizing the compound having a saccharide skeleton before, simultaneously with or after the step (1) of mixing the compound having a saccharide skeleton, the nitrogen-containing compound, and the crosslinking agent to obtain a mixture.

[12] The method for producing a carbonaceous material according to [11], wherein the step (A) is:

a step (a1) of, before the step (1), mixing a compound having a saccharide skeleton with water in an amount of 5 to 50% by mass based on the mass of the compound, and heating the mixture at a temperature of 50 to 200°C for 1 minute to 5 hours;
a step (b1) of, before the step (1), subjecting a compound having a saccharide skeleton to mechanical treatment having an action of impact, crushing, friction, and/or shearing;
a step (a2) of, simultaneously with or after the step (1), mixing a mixture comprising a compound having a saccharide skeleton with water in an amount of 5 to 50% by mass based on the mass of the compound having a saccharide skeleton and heating the mixture at a temperature of 50 to 200°C for 1 minute to 5 hours; and/or
a step (b2) of, simultaneously with or after the step (1), subjecting a mixture comprising a compound having a saccharide skeleton to mechanical treatment having an action of impact, crushing, friction and/or shearing.

EFFECTS OF THE INVENTION

According to the present invention, it is possible to provide a carbonaceous material suitable for a power storage device having both a high discharge capacity per unit weight and a high discharge capacity per unit volume.

DETAILED DESCRIPTION

Hereinafter, embodiments of the present invention will be described in detail. It is not intended to limit the present invention to the following embodiments.

In the present description, the power storage device refers to any device including a negative electrode comprising a carbonaceous material and utilizing an electrochemical phenomenon. Specifically, the power storage device includes, for example, secondary batteries such as lithium ion secondary batteries, nickel-hydrogen secondary batteries, and nickel-cadmium secondary batteries and capacitors such as electric double layer capacitors, and the like, which can be repeatedly used by charging. Among these, the power storage device may be a secondary battery, especially, a nonaqueous electrolyte secondary battery (for example a lithium ion secondary battery, a sodium ion battery, a lithium sulfur battery, a lithium air battery, an all-solid-state battery, or an organic radical battery), and may be a lithium ion secondary battery among others.

The carbonaceous material of the present invention is a carbonaceous material suitable for providing a power storage device having both a high discharge capacity per unit weight and a high discharge capacity per unit volume, and has a nitrogen element content determined by elemental analysis of 1.0% by mass or more, a true density determined by a butanol immersion method of 1.50 to 1.65 g/cc, a tapped bulk density of 0.7 to 1.0 g/cc, and a carbon interplanar spacing ($d_{002}$) measured by X-ray diffraction of 3.65 Å or more.

The carbonaceous material of the present invention has a nitrogen element content determined by elemental analysis of 1.0% by mass or more. The nitrogen element content is an analysis value obtained through elemental analysis of the carbonaceous material. When the nitrogen element content is less than 1.0% by mass, carbon planes are close to each other and there are a reduced number of sites that adsorb and desorb lithium ions at the time of charge and discharge, so that both the discharge capacity per unit volume and the discharge capacity per unit weight cannot be sufficiently increased. The nitrogen element content is preferably 1.2% by mass or more, more preferably 1.5% by mass or more, still more preferably 2.0% by mass or more, and further preferably 2.2% by mass or more from the viewpoint of more easily increasing the discharge capacity per unit volume and the discharge capacity per unit weight. The upper limit of the nitrogen element content is preferably 8.0% by mass or less, more preferably 6.0% by mass or less, still more preferably 5.0% by mass or less, and further preferably 4.0% by mass or less from the viewpoint of inhibiting a decrease in discharge capacity when repeating charging and discharging. The nitrogen element content determined by elemental analysis of the carbonaceous material can be adjusted to fall within the above range by, for example, adjusting the addition amount of the nitrogen-containing compound that can be added when the carbonaceous material is produced, or adjusting the temperature and time for heat treatment.

The carbonaceous material of the present invention has a true density determined by a butanol immersion method of 1.50 to 1.65 g/cc. When the true density is less than 1.50 g/cc, the density is not sufficiently increased even if an electrode is produced, so that the discharge capacity per unit volume cannot be sufficiently increased. In addition, when the true density exceeds 1.65 g/cc, the crystallization of the carbonaceous material has proceeded, and therefore there are a reduced number of sites that adsorb and desorb lithium ions and are derived from intercrystalline voids, which are characteristic of non-graphitizable carbon, so that the discharge capacity per unit weight cannot be sufficiently increased. From the viewpoint of more easily increasing the discharge capacity per unit volume, the true density of the carbonaceous material of the present invention is preferably 1.51 g/cc or more, more preferably 1.52 g/cc or more, and still more preferably 1.55 g/cc or more. The true density is preferably 1.64 g/cc or less, more preferably 1.62 g/cc or less, and still more preferably 1.60 g/cc or less from the viewpoint of sufficiently increasing the discharge capacity per unit weight derived from the storage site of clustered lithium. The true density of the carbonaceous material is a true density determined by a butanol method, and is measured by, for example, the method described in Examples. The true density can be adjusted to fall within the above range by, for example, selecting a compound having a saccharide skeleton to be used in the production of the carbonaceous material or gelatinizing the compound having a saccharide skeleton.

The carbonaceous material of the present invention has a tapped bulk density of 0.7 to 1.0 g/cc. When the tapped bulk density is less than 0.7 g/cc, it is difficult to sufficiently increase the discharge capacity per unit volume. When the tapped bulk density exceeds 1.0 g/cc, the battery performance including the discharge capacity per unit weight deteriorates. It is considered that the tapped bulk density of the carbonaceous material of the present invention leads to an increase in the electrode density of a negative electrode obtained using the carbonaceous material, and as a result, can increase the discharge capacity per unit volume. From the viewpoint of easily and sufficiently increasing both the discharge capacity per unit volume and the discharge capacity per unit weight, the tapped bulk density is preferably 0.72 g/cc or more, more preferably 0.75 g/cc or more, still more preferably 0.78 g/cc or more, and further preferably 0.80 g/cc or more. The tapped bulk density is preferably 0.97 g/cc or less, more preferably 0.95 g/cc or less, still more preferably 0.93 g/cc or less, and further preferably 0.91 g/cc or less from the viewpoint of liquid absorbability of an electrolytic solution into the carbonaceous material when an electrode is formed. The tapped bulk density of the carbonaceous material is measured by repeating a set of 100 repetitions of freely dropping, from a height of 5 cm, a cylindrical glass container having a diameter of 1.8 cm filled with the carbonaceous material passed through a sieve having a mesh size

of 300 $\mu$m, until the rate of change in the density determined from the volume and the mass of the carbonaceous material is 2% or less between before and after one set of the operation. The tapped bulk density can be adjusted to fall within the above range by selecting the nitrogen-containing compound or the crosslinking agent to be used in the production of the carbonaceous material, or by adjusting the particle size, shape, particle size distribution, or the like of the carbonaceous material.

The carbonaceous material of the present invention has a carbon interplanar spacing ($d_{002}$) measured by X-ray diffraction of 3.65 Å or more. When the carbon interplanar spacing ($d_{002}$) of the carbonaceous material is less than 3.65 Å, it is not possible to sufficiently increase both the discharge capacity per unit volume and the discharge capacity per unit weight because efficient movement of lithium ions due to proximity of carbon planes is hindered, and the storage sites of clustered lithium are reduced due to insufficient development of micropores. The carbon interplanar spacing ($d_{002}$) is preferably 3.68 Å or more, more preferably 3.70 Å or more, still more preferably 3.71 Å or more, and further preferably 3.73 Å or more from the viewpoint of more easily increasing the discharge capacity per unit volume and the discharge capacity per unit weight. The upper limit of the carbon interplanar spacing ($d_{002}$) is preferably 4.00 Å or less, more preferably 3.95 Å or less, still more preferably 3.90 Å or less, and further preferably 3.85 Å or less from the viewpoint of appropriately decreasing $d_{002}$, and thereby appropriately reducing the volume of the carbonaceous material, increasing the execution capacity per unit volume, and easily increasing the discharge capacity per unit volume. The carbon interplanar spacing ($d_{002}$) is measured using the Bragg's equation by X-ray diffraction measurement, and specifically, is measured by the method described in Examples. The carbon interplanar spacing ($d_{002}$) can be adjusted to fall within the above range by, for example, adjusting the addition amount of the nitrogen-containing compound that can be added when the carbonaceous material is produced, or adjusting the temperature and time for heat treatment.

In a preferred embodiment of the present invention, it has been found that when the ratio $D_{20}/D_{80}$ of $D_{80}$ to $D_{20}$ in the volume-based particle size distribution of the carbonaceous material of the present invention determined by a laser diffraction scattering particle size distribution measurement method is preferably 3.5 to 20, the tapped bulk density and the electrode density of a negative electrode obtained using the carbonaceous material can be increased. That $D_{80}/D_{20}$ is within the above range indicates that the particle size distribution of the carbonaceous material is wide, and in this case, it is considered that filling gaps among large particles with an appropriate amount of small particles to decrease the porosity makes it easier to increase the tapped bulk density and the electrode density of a negative electrode obtained using the carbonaceous material. From the viewpoint of more easily increasing the electrode density, $D_{80}/D_{20}$ is preferably 4.0 or more, more preferably 4.5 or more, still more preferably 5.0 or more, further preferably 5.5 or more, and particularly preferably 6.0 or more, and from the same point of view, $D_{80}/D_{20}$ is preferably 18 or less, more preferably 16 or less, and still more preferably 15 or less. The volume-based particle size distribution determined by a laser diffraction scattering particle size distribution measurement method can be measured using a particle size/particle size distribution measuring apparatus using a dispersion of the carbonaceous material as a measurement sample, and in the particle size distribution, the particle size at which the cumulative volume is 80% is defined as $D_{80}$, and the particle size at which the cumulative volume is 20% is defined as $D_{20}$.

In one preferred embodiment of the present invention, the degree of circularity measured for particles with which a circle corresponding to the projected area determined with a flow type particle image analyzer of the particle of the carbonaceous material of the present invention is 5 $\mu$m or more is preferably 0.70 or more, more preferably 0.71 or more, still more preferably 0.72 or more, and further preferably 0.73 or more from the viewpoint of easily increasing the electrode density of a negative electrode obtained using the carbonaceous material. From the same point of view, the degree of circularity is preferably 0.99 or less, more preferably 0.98 or less, and still more preferably 0.96 or less. It is considered that when the degree of circularity is within the above range, the carbonaceous material has a shape close to a spherical shape, so that the fluidity is more easily increased, and the tapped bulk density and the electrode density of a negative electrode to be obtained using the carbonaceous material are easily increased. The degree of circularity is an average of the degrees of circularity obtained through the following procedure. Using a dispersion of the carbonaceous material as a measurement sample, a projected image of particles is taken using a flow type particle image analyzer. Then, for one particle in the projected image, where the diameter of an equivalent circle having the same projected area as that of the particle is D $\mu$m and the length of the largest distance between two parallel lines sandwiching the particle image therewith is M $\mu$m, a degree of circularity per particle is calculated from the formula: degree of circularity = $(D/M)^2$. For, for example, 5000 or more, preferably 10,000 or more particles having a D of 5 $\mu$m or more, the degree of circularity per particle is measured, and an average value of the measured degrees of circularity is calculated.

In one preferred embodiment of the present invention, the value of the half width of the peak at around 1360 cm$^{-1}$ in the Raman spectrum of the carbonaceous material of the present invention observed by laser Raman spectroscopy is preferably 240 cm$^{-1}$ or more, more preferably 250 cm$^{-1}$ or more, and still more preferably 260 cm$^{-1}$ or more from the viewpoint of more easily increasing the discharge capacity per unit volume and the discharge capacity per unit weight. The Raman spectrum is measured using a Raman spectrometer, for example, under the conditions described in Examples.

In one preferred embodiment of the present invention, the value of the half width of the peak at around 1650

cm$^{-1}$ in the Raman spectrum of the carbonaceous material of the present invention observed by laser Raman spectroscopy is preferably 98 cm$^{-1}$ or more, more preferably 100 cm$^{-1}$ or more, and still more preferably 102 cm$^{-1}$ or more from the viewpoint of more easily increasing the discharge capacity per unit volume and the discharge capacity per unit weight. The Raman spectrum is measured using a Raman spectrometer, for example, under the conditions described in Examples.

The method for producing the carbonaceous material of the present invention is not particularly limited as long as a carbonaceous material having the characteristics as described above can be obtained, and examples thereof include a method in which a carbon precursor is mixed together with a nitrogen-containing compound and a crosslinking agent, the mixture obtained is heat-treated in an inert gas atmosphere at 500°C or higher and 900°C or lower, then pulverized and/or classified, and the obtained char is further heat-treated at 800 to 1600°C. For example, the carbon precursor is not particularly limited as long as a carbonaceous material satisfying the characteristics described above is obtained, but is preferably a compound having a saccharide skeleton from the viewpoint of easily adjusting the characteristics described above of the carbonaceous material to fall within preferable ranges.

In one preferred embodiment of the present invention, the method for producing the carbonaceous material of the present invention comprises at least the following steps:

(1) a step of mixing a compound having a saccharide skeleton, a nitrogen-containing compound, and a crosslinking agent to obtain a mixture;
(2) a step of subjecting the mixture to heat treatment at 500 to 900°C in an inert gas atmosphere to obtain a char;
(3) a step of pulverizing and/or classifying the char; and
(4) a step of subjecting the char pulverized and/or classified to heat treatment at 800 to 1600°C in an inert gas atmosphere to obtain a carbonaceous material. The present invention also provides the above method for producing a carbonaceous material.

Step (1) is a step of mixing a compound having a saccharide skeleton, a nitrogen-containing compound, and a crosslinking agent to obtain a mixture. Examples of the compound having a saccharide skeleton to be used as a raw material include monosaccharides such as glucose, galactose, mannose, fructose, ribose, and glucosamine; disaccharides such as sucrose, trehalose, maltose, cellobiose, maltitol, lactobionic acid, and lactosamine; and polysaccharides such as starch, glycogen, agarose, pectin, cellulose, chitin, chitosan, oligosaccharide, and xylitol. As the compound having a saccharide skeleton, one of these compounds may be used, or two or more of them may be used in combination. Among these compounds having a saccharide skeleton, starch is preferred because it is easily available in a large quantity. Examples of the starch include corn starch, potato starch, wheat starch, rice starch, tapioca starch, sago starch, sweet potato starch, milo starch, arrowroot starch, bracken starch, lotus root starch, green bean starch, and dogtooth violet starch. These starches may be physically, enzymatically, or chemically processed, and may be starch processed into pregelatinized starch, phosphate-crosslinked starch, starch acetate, hydroxypropyl starch, oxidized starch, dextrin, or the like. Corn starch and wheat starch, and pregelatinized starches thereof are preferred as the starch because they are inexpensive in addition to their good availability.

In one preferred embodiment of the production method of the present invention, the compound having a saccharide skeleton is a compound with which in an image obtained by observing cross sections of particles of the compound with a secondary electron microscope, when 20 particles having a cross-sectional area of 3 $\mu$m$^2$ or more and 100 $\mu$m$^2$ or less are randomly selected, the number of particles having a void of 1 $\mu$m$^2$ or more is preferably 3 or less, more preferably 2 or less, and still more preferably 1 or less. Thanks to producing a char using such a compound having few voids as a raw material, it is easy to produce a carbonaceous material satisfying the characteristics of the present invention without performing an additional treatment such as Step (A) described later, and it is easy to produce a carbonaceous material suitable for a power storage device having both a high discharge capacity per unit weight and a high discharge capacity per unit volume.

The nitrogen-containing compound that can be used in Step (1) is not particularly limited as long as it is a compound having a nitrogen atom in the molecule, and examples thereof include inorganic ammonium salts such as ammonium chloride, ammonium sulfate, ammonium carbonate, and ammonium nitrate, organic ammonium salts such as ammonium formate, ammonium acetate, ammonium oxalate, and diammonium hydrogen citrate, aromatic amine hydrochlorides such as aniline hydrochloride and aminonaphthalene hydrochloride, and nitrogen-containing organic compounds such as melamine, pyrimidine, pyridine, pyrrole, imidazole, indole, urea, cyanuric acid, and benzoguanamine. As the nitrogen-containing compound, one of these nitrogen-containing compounds may be used, or two or more of them may be used in combination. Among these nitrogen-containing compounds, melamine and urea, which have a high nitrogen content in the molecule, are preferable from the viewpoint of easily incorporating a large amount of nitrogen element into the carbonaceous material. As the nitrogen-containing compound, a compound having a volatilization temperature of preferably 100°C or higher, more preferably 150°C or higher is preferable from the viewpoint of a reaction with a saccharide compound in the heat treatment process.

The crosslinking agent that can be used in Step (1) is a compound capable of crosslinking the compound having a saccharide skeleton as a raw material, and acts as a catalyst that promotes an interchain bond forming reaction of a saccharide compound and/or a reaction between a saccharide compound and a nitrogen-containing compound that proceeds in parallel with a hydrolysis reaction or a dehydration reaction of the saccharide compound, or crosslinks the saccharide compound and/or the nitrogen-containing compound by itself. The type of the crosslinking agent is not particularly limited, and examples thereof include aliphatic monovalent carboxylic acids such as formic acid, acetic acid, propionic acid, butyric acid, valeric acid, caproic acid, heptanoic acid, octanoic acid, nonanoic acid, decanoic acid, undecanoic acid, lauric acid, myristic acid, palmitic acid, stearic acid, linoleic acid, and oleic acid; aromatic monovalent carboxylic acids such as benzoic acid, salicylic acid, and toluylic acid; polyvalent carboxylic acids such as oxalic acid, malonic acid, succinic acid, glutaric acid, adipic acid, fumaric acid, maleic, phthalic acid, and terephthalic acid; hydroxycarboxylic acids such as lactic acid, tartaric acid, citric acid, and malic acid; carboxylic acids such as ethylenediaminetetraacetic acid, sulfonic acids such as p-toluenesulfonic acid and methanesulfonic acid; amino acids such as glycine, alanine, valine, leucine, isoleucine, serine, threonine, cysteine, methionine, asparagine, glutamine, proline, phenylalanine, tyrosine, and tryptophan; hydrochloric acid, sulfuric acid, and phosphoric acid. As the crosslinking agent, one of these crosslinking agents may be used, or two or more of them may be used in combination. Among these crosslinking agents, polycarboxylic acids and hydroxycarboxylic acids are preferable from the viewpoint of inhibiting melting and foaming of raw materials in the step of heat-treating to obtain a char, and among them, succinic acid, adipic acid, and citric acid are more preferable. When a carbonaceous material is produced by calcining a raw material comprising a compound having a saccharide skeleton, the compound is easily melted, fused, foamed and the like in a calcining step, and as a result, the resulting carbonaceous material usually has a flat shape rather than a spherical shape. By performing the calcination using a crosslinking agent, fusion among raw materials and foaming can be reduced, and as a result, the tapped bulk density of the resulting carbonaceous material can be sufficiently increased, and both the discharge capacity per unit volume and the discharge capacity per unit weight in a power storage device can be easily increased.

The mixing ratio of the compound having a saccharide skeleton, the nitrogen-containing compound, and the crosslinking agent is not particularly limited, and may be appropriately adjusted such that a carbonaceous material having desired characteristics is obtained. For example, when the amount of the nitrogen-containing compound is increased, the content of the nitrogen element contained in the carbonaceous material tends to increase, and when the amount of the crosslinking agent is increased, the true density tends to increase. In one preferred embodiment of the present invention, the amount of the compound having a saccharide skeleton contained in the mixture obtained in Step (1) is preferably 50 to 99% by mass, and more preferably 80 to 95% by mass, based on the total amount of the compound having a saccharide skeleton, the nitrogen-containing compound, and the crosslinking agent. The amount of the nitrogen-containing compound contained in the mixture is preferably 1 to 30% by mass, and more preferably 3 to 15% by mass, based on the total amount of the compound having a saccharide skeleton, the nitrogen-containing compound, and the crosslinking agent. Furthermore, the amount of the crosslinking agent contained in the mixture is preferably 1 to 30% by mass, and more preferably 3 to 10% by mass, based on the total amount of the compound having a saccharide skeleton, the nitrogen-containing compound, and the crosslinking agent.

Next, in Step (2), the mixture obtained in Step (1) is heat-treated at 500 to 900°C in an inert gas atmosphere to get a char. The char is also referred to as a carbon precursor. The heat treatment temperature in Step (2) is preferably 550 to 850°C, and more preferably 600 to 800°C. The rate of raising temperature until reaching the heat treatment temperature (reaching temperature) is 50°C/hour or more, and preferably 50°C/hour to 200°C/hour. Regarding the heat treatment time, the holding time at the ultimate temperature is usually 5 minutes or more, preferably 5 minutes to 2 hours, more preferably 10 minutes to 1 hour, and still more preferably 30 minutes to 1 hours. When the heat treatment temperature and time are within the above ranges, carbonization of the compound having a saccharide skeleton is easily controlled, and the above characteristic values of the carbonaceous material are easily adjusted to desired ranges. The heat treatment temperature may be a constant temperature, but is not particularly limited as long as it is within the above range.

Step (2) is performed in an inert gas atmosphere. As long as this step is performed in an inert gas atmosphere, the inert gas may or may not be actively supplied. Examples of the inert gas include argon gas, helium gas, and nitrogen gas, and nitrogen gas is preferable. Through such a heat treatment step, a carbide, which is a precursor to give a carbonaceous material, is obtained.

In Step (3), the carbide obtained is pulverized and/or classified. The method of pulverization and classification is not particularly limited, and may be performed by a normal method, for example, a method using a ball mill or a jet mill. By pulverizing and/or classifying the carbide, aggregates generated through the heat treatment in Step (2) can be crushed or removed.

In Step (4), the carbonaceous material of the present invention can be obtained by heat-treating the pulverized and/or classified carbide at 800 to 1600°C in an inert gas atmosphere. The heat treatment temperature in Step (4) is preferably 900 to 1400°C, more preferably 1000 to 1400°C, and still more preferably 1100 to 1200°C. The rate of raising temperature until reaching the heat treatment temperature (ultimate temperature) is 50°C/hour or more, and preferably 50°C/hour to 200°C/hour. Regarding the heat treatment time, the holding time at the ultimate temperature is usually 1 minute or more, preferably 5 minutes to 2 hours, more preferably 10 minutes to 1 hour, and still more preferably 10 minutes to 30 minutes. When the heat treatment temperature and time are within the above ranges, it is easy to adjust the above characteristic values of an eventually obtained carbonaceous material to desired ranges. The heat treatment temperature may be a constant temperature, but is not particularly limited as long as it is within the above range.

At this time, the pulverized and/or classified carbide obtained in Step (3) may be subjected to Step (4) with addition of a volatile organic substance thereto. The volatile organic substance refers to an organic compound that almost all (for example, 80% or more, preferably 90% or more) fails to carbonize and volatilizes (vaporizes or thermally decomposes into a gas) when heat-treated (for example, at 500°C or higher) with an inert gas such as nitrogen. The volatile organic substance is not particularly limited, and examples thereof include thermoplastic resins and low molecular weight organic compounds. Examples of the thermoplastic resins specifically include polystyrene, polyethylene, polypropylene, poly(meth)acrylic acid, and poly(meth)acrylate. In the present description, (meth)acryl is a generic term for methacryl and acryl. Examples of the low molecular weight organic compounds include hexane, toluene, xylene, mesitylene, styrene, naphthalene, phenanthrene, anthracene, and pyrene. Polystyrene, polyethylene, and polypropylene are preferable as the thermoplastic resin because those which volatilize at a calcination temperature and do not oxidize and activate a surface of a carbon precursor when thermally decomposed are preferable. The low molecular weight organic compound preferably has low volatility at room temperature (for example, 20°C) from the viewpoint of safety, and naphthalene, phenanthrene, anthracene, pyrene, and so on are preferable. Addition of such a volatile organic substance is preferable in that the specific surface area can be further reduced while the characteristic structure of the present invention is maintained.

When a carbonaceous material is produced by the production method described above, the production method may further comprise, in addition to Steps (1) to (4), Step (A) of gelatinizing the compound having a saccharide skeleton before, simultaneously with, or after Step (1) of mixing the compound having a saccharide skeleton, the nitrogen-containing compound, and the crosslinking agent to obtain a mixture. By performing gelatinization in Step (A), cavities contained in the compound having a saccharide skeleton to be used as a raw material are closed, and as a result, it is easy to adjust the true density, the tapped bulk density, and the carbon interplanar spacing of the eventually obtained carbonaceous material to desired ranges, and it is easy to produce a carbonaceous material suitable for a power storage device having both a high discharge capacity per unit weight and a high discharge capacity per unit volume.

The method of the gelatinization in Step (A) is not particularly limited, and examples thereof include a method of heating the compound having a saccharide skeleton alone or in the state of an arbitrary mixture with the nitrogen-containing compound, etc. in the presence of water, and a method of subjecting the compound having a saccharide skeleton alone or in the state of an arbitrary mixture with the nitrogen-containing compound, etc. to mechanical treatment having an action of impact, crushing, friction, and/or shearing. Such heat or external force is applied to close cavities contained in the compound having a saccharide skeleton. The gelatinization in Step (A) is preferably performed, for example, until, when 20 particles having a sectional area of 3 $\mu m^2$ or more and 100 $\mu m^2$ or less are arbitrarily selected in an image obtained by observing a cross section of particles of the compound having a saccharide skeleton after gelatinization with a secondary electron microscope, the amount of particles having a void as large as 1 $\mu m^2$ or more reaches a prescribed amount, preferably 3 particles or less, more preferably 2 particles or less, and still more preferably 1 particle or less. The microscopic observation may be performed after the aggregates contained in the gelatinized compound are removed by pulverization or classification. The mixture obtained through Step (1) and optional Step (A) as described above is heat-treated in Step (2). Accordingly, when Step (A) is performed, the Step (A) is a step performed before Step (2).

In one preferred embodiment of the present invention, the production method of the present invention may comprise the steps given below as Step (A):

Step (a1) of, before Step (1), mixing a compound having a saccharide skeleton with water in an amount of 5 to 50% by mass based on the mass of the compound, and heating the mixture at a temperature of 50 to 200°C for 1 minute to 5 hours;
Step (b1) of, before Step (1), subjecting a compound having a saccharide skeleton to mechanical treatment having an action of impact, crushing, friction, and/or shearing;
Step (a2) of, simultaneously with or after Step (1), mixing a mixture comprising a compound having a saccharide skeleton with water in an amount of 5 to 50% by mass based on the mass of the compound having a saccharide skeleton and heating the mixture at a temperature of 50 to 200°C for 1 minute to 5 hours; and/or
Step (b2) of, simultaneously with or after Step (1), subjecting a mixture comprising a compound having a saccharide skeleton to mechanical treatment having an action of impact, crushing, friction and/or shearing.

Step (a1) is a step of, before Step (1), mixing a compound having a saccharide skeleton with water in an amount of 5 to 50% by mass based on the mass of the compound, and heating the mixture at a temperature of 50 to 200°C for 1 minute to 5 hours. The amount of water at the time of mixing water with the compound having a saccharide skeleton is required to be a certain amount or more, but it is preferably small from the viewpoint of controlling the energy required for distilling off the mixed water in the process of producing the carbonaceous material, and it is 5 to 50% by mass, preferably 10 to 50% by mass, and more preferably 10 to 30% by mass, based on the mass of the compound having a saccharide skeleton. The heating temperature is 50 to 200°C, preferably 60 to 180°C, and more preferably 80 to 180°C. The heating time is preferably 1 minute to 5 hours, preferably 3 minutes to 1 hour, and more preferably 10 minutes to 30 minutes.

Step (b1) is a step of, before Step (1), subjecting a compound having a saccharide skeleton to mechanical treatment having an action of impact, crushing, friction, and/or shearing. Examples of the apparatus to be used in the mechanical treatment having the action of impact, crushing, friction, and/or shearing include a pulverizer, an extruder, a milling machine, a grinding machine, and a kneading apparatus. The treatment conditions such as the treatment time are not particularly limited, but for example, in the case of using a ball vibration mill, treatment conditions of 20 Hz and 10 minutes can be mentioned.

Step (a2) is a step of, simultaneously with or after Step (1), mixing a mixture comprising a compound having a saccharide skeleton with water in an amount of 5 to 50% by mass based on the mass of the compound having a saccharide skeleton and heating the mixture at a temperature of 50 to 200°C for 1 minute to 5 hours, and the description of the preferred embodiment and the like described for Step (a1) similarly applies.

Step (b2) is a step of, simultaneously with or after Step (1), subjecting a mixture comprising a compound having a saccharide skeleton to mechanical treatment having an action of impact, crushing, friction and/or shearing, and the description of the preferred embodiment and the like described for Step (b1) similarly applies.

The carbonaceous material of the present invention or a carbonaceous material obtained by the production method of the present invention can be suitably used as an active material of a negative electrode for a power storage device.

Hereinafter, a method for producing a negative electrode for a power storage device using the carbonaceous material of the present invention will be specifically described. As to the negative electrode, for example, a binder is added to the carbonaceous material, an appropriate amount of a solvent is added thereto, and then these are kneaded to prepare an electrode mixture. The resulting electrode mixture is applied to a current collector plate made of a metal plate or the like, dried, and then pressure-formed, whereby a negative electrode for a power storage device, for example, a negative electrode for a nonaqueous electrolyte secondary battery such as a lithium ion secondary battery, a sodium ion battery, a lithium sulfur battery, or a lithium air battery can be produced.

Thanks to using the carbonaceous material of the present invention, an electrode (negative electrode) having a high discharge capacity per unit weight and a high discharge capacity per unit volume can be produced. When it is desired to impart higher conductivity to the electrode, a conductive assistant may be added, as necessary, during the preparation of the electrode mixture. As the conductive assistant, carbon black, vapor grown carbon fibers (VGCF), nanotubes, etc., which are conductive, can be used. The added amount of the conductive assistant varies depending on the type of the conductive assistant to be used, but when the addition amount is excessively small, expected conductivity may not be obtained, whereas when the addition amount is excessively large, the dispersion of the conductive assistant in the electrode mixture may be deteriorated. From such a point of view, in the case of adding a conductive assistant, the amount thereof is preferably 0.5 to 10% by mass, more preferably 0.5 to 7% by mass, and still more preferably 0.5 to 5% by mass where the sum total of the amount of the active material (carbonaceous material), the amount of the binder, and the amount of the conductive assistant is 100% by mass. The binder is not particularly limited as long as it does not react with an electrolytic solution, and examples thereof include PVDF (polyvinylidene fluoride), polytetrafluoroethylene, and a mixture of SBR (styrene-butadiene rubber) and CMC (carboxymethyl cellulose). Among them, the mixture of SBR and CMC is preferable because SBR and CMC attached to a surface of an active material hardly inhibit lithium ion transfer, and good input/output characteristics can be obtained. In order to dissolve CMC or an aqueous emulsion of SBR to form a slurry, a polar solvent such as water is suitably used. It is also possible to dissolve a solvent emulsion of PVDF or the like in N-methylpyrrolidone or the like, and then use the solution. When the addition amount of the binder is excessively large, the resistance of a resulting electrode increases, so that the internal resistance of a battery increases and the battery characteristics may be deteriorated. When the addition amount of the binder is excessively small, the bonding among the particles of the negative electrode material and between the particles of the negative electrode material and the current collecting material may be insufficient. The preferred addition amount of the binder varies depending on the type of the binder to be used, but for example, in the case of a binder using water as a solvent, a plurality of binders such as a mixture of SBR and CMC are often mixed and used, and the total amount of all the binders to be used is preferably 0.5 to 5% by mass, and more preferably 1 to 4% by mass. On the other hand, in the case of a PVDF-based binder, the preferred addition amount thereof is preferably 3 to 13% by mass, and more preferably 3 to 10% by mass. The amount of the carbonaceous material in the electrode mixture is preferably 80% by mass or more, and more preferably 90% by mass or more. The amount of the carbonaceous material in the electrode mixture is preferably 100% by mass or less, and more preferably 97% by mass or less.

An electrode active material layer is basically formed on both sides of the current collector plate, but may be formed on one side, as necessary. A thicker electrode active material layer is preferable for an increased capacity because the current collector plate, a separator, etc. can be reduced. However, a wider electrode area opposed to a counter electrode is more advantageous for improving input/output characteristics, and therefore, when the electrode active material layer is excessively thick, the input/output characteristics may deteriorate. The thickness (per one side) of the active material layer is preferably 10 to 80 $\mu$m, more preferably 20 to 75 $\mu$m, and still more preferably 30 to 75 $\mu$m from the viewpoint of output at the time of battery discharge.

The power storage device using the carbonaceous material of the present invention has a high discharge capacity per unit weight and a high discharge capacity per unit volume. When a negative electrode for a power storage device is formed using the carbonaceous material of the present invention, other materials constituting a battery such as a positive electrode material, a separator, and an electrolytic solution are not particularly limited, and various materials conventionally used or proposed as a power storage device can be used.

For example, as the positive electrode material, composite metal chalcogen compounds such as layered oxide-based compounds (represented as $LiMO_2$, where M is a metal, such as $LiCoO_2$, $LiNiO_2$, $LiMnO_2$, or $LiNi_xCo_yMo_zO_2$ (here, x, y, and z represent composition ratios)), olivine-based compounds (represented as $LiMPO_4$, where M is a metal, such as $LiFePO_4$), and spinel-based compounds (represented as $LiM_2O_4$, where M is a metal, such as $LiMn_2O_4$) are preferable, and these chalcogen compounds may be mixed and used, as necessary. These positive electrode materials are molded together with an appropriate binder and a carbon material for imparting conductivity to an electrode to form a layer on a conductive current collecting material, whereby a positive electrode is formed.

For example, when the power storage device is a nonaqueous electrolyte secondary battery, the nonaqueous solvent type electrolyte solution is generally formed by dissolving an electrolyte in a nonaqueous solvent. As the nonaqueous solvent, for example, an organic solvent such as propylene carbonate, ethylene carbonate, dimethyl carbonate, diethyl carbonate, dimethoxyethane, diethoxyethane, $\gamma$-butyllactone, tetrahydrofuran, 2-methyltetrahydrofuran, sulfolane, or 1,3-dioxolane can be used singly, or two or more of them may be used in combination. In addition, as the electrolyte, $LiClO_4$, $LiPF_6$, $LiBF_4$, $LiCF_3SO_3$, $LiAsF_6$, LiCl, LiBr, $LiB(C_6H_5)_4$, $LiN(SO_3CF_3)_2$, or the like is used.

When the power storage device is a nonaqueous electrolyte secondary battery, the nonaqueous electrolyte secondary battery is generally formed by making a positive electrode and a negative electrode formed as described above face each other, as necessary, with a liquid-permeable separator interposed therebetween, and then soaking them in an electrolytic solution. As such a separator, a permeable or liquid-permeable separator made of a nonwoven fabric usually used for a secondary battery or another porous material can be used. Alternatively, instead of the separator or together with the separator, a solid electrolyte composed of a polymer gel impregnated with an electrolytic solution can also be used.

The carbonaceous material of the present invention is suitable as, for example, a carbonaceous material for a power storage device (typically, a nonaqueous electrolyte secondary battery for driving a vehicle) mounted on a vehicle such as an automobile. In the present invention, the vehicle refers to a vehicle generally known as an electric vehicle, a hybrid vehicle with a fuel cell and an internal combustion engine, etc. without particular limitation; however, the vehicle comprises at least a power source device provided with the battery, an electric drive mechanism driven by power supply from the power source device, and a control device controlling this mechanism. The vehicle may further comprise a mechanism provided with a power generation brake and a regenerative brake and converting energy derived from braking into electricity to charge the nonaqueous electrolyte secondary battery.

EXAMPLES

Hereinafter, the present invention is described specifically by way of Examples, but these do not limit the scope of the present invention. Methods for measuring physical properties of a carbonaceous material and a negative electrode fabricated using the carbonaceous material will hereinafter be described, and the physical properties and the measurement thereof (or physical property values and measured values) described in the present description including the EXAMPLES section are based on values determined by the following methods.

(Nitrogen element content)

Elemental analysis was performed on a basis of an inert gas dissolution method using an oxygen/nitrogen/hydrogen analyzer EMGA-930 manufactured by HORIBA, Ltd.

The detection methods of the analyzer are oxygen: an inert gas fusion-non-dispersive infrared absorption method (NDIR), nitrogen: an inert gas fusion-thermal conduction method (TCD), and hydrogen: an inert gas fusion-non-dispersive infrared absorption method (NDIR). Calibration was performed with an (oxygen/nitrogen) Ni capsule, $TiH_2$ (H standard sample), SS-3 (N, O standard sample), and SiN (N standard sample). 20 mg of a sample whose moisture content had been measured at 250°C for about 10 minutes as a pretreatment was put into a Ni capsule and then measured after being degassed for 30 seconds in the elemental analyzer. The test was performed by analyzing three specimens, and the average value was taken as an analysis value. The nitrogen element content in the sample was obtained as described above.

(True density determined by butanol method)

The true density $\rho_{Bt}$ was measured by a butanol method in accordance with the method prescribed in JIS R 7212. The mass ($m_1$) of a pycnometer with a bypass line having an internal volume of approximately 40 mL was precisely measured. Next, a sample was placed flat on the bottom of the pycnometer to have a thickness of approximately 10 mm, and then the mass ($m_2$) thereof was precisely measured. To this was gently added 1-butanol to a depth of approximately 20 mm from the bottom. Next, the pycnometer was gently vibrated, and after it was confirmed that large air bubbles were not formed any longer, the pycnometer was placed in a vacuum desiccator and gradually evacuated to a pressure of 2.0 to 2.7 kPa. The pressure was maintained for 20 minutes or more. After the generation of air bubbles stopped, the pycnometer was taken out and further filled with 1-butanol. A stopper was inserted, the pycnometer was then soaked in a constant-temperature bath (adjusted to 30 $\pm$ 0.03°C) for at least 15 minutes, and the liquid level of 1-butanol was adjusted with the marked line. Subsequently, the pycnometer was taken out, the exterior thereof was thoroughly wiped, and the pycnometer was cooled to room temperature. Then, the mass ($m_4$) was precisely measured. Next, the same pycnometer was filled with 1-butanol alone, and soaked in a constant-temperature water bath in the same manner as described above. Thereafter, the marked line was adjusted, and then the mass ($m_3$) was measured. In addition, distilled water boiled immediately before use to remove the dissolved gas was placed in the pycnometer and the pycnometer was soaked in a constant-temperature water bath in the same manner as described above. Thereafter, the marked line was aligned, and then the mass ($m_5$) was measured. The true density $\rho_{Bt}$ was calculated using the following formula. Here, d is the specific gravity of water at 30°C (0.9946).

[Expression 1]

$$\rho_{Bt} = \frac{m_2 - m_1}{m_2 - m_1 - (m_4 - m_3)} \times \frac{m_3 - m_1}{m_5 - m_1} d$$

(Tapped bulk density)

A carbonaceous material was dried at 100°C for 3 hours in a vacuum dryer, and then dropped and filled into a cylindrical glass container having a diameter of 1.8 cm through a sieve having a mesh size of 300 $\mu$m. An operation of freely dropping the glass container filled with the carbonaceous material from a height of 5 cm is defined as a single tap, and a step of repetitively performing 100 taps is defined as a single set. The density measured through repeating the set of the operation until the rate of change in the density determined from the volume and the mass of the carbonaceous material is 2% or less between before and after one set of the operation is defined as a tapped bulk density.

(Measurement of average interplanar space $d_{002}$ determined using the Bragg's equation by X-ray diffraction measurement)

Using "MiniFlex II manufactured by Rigaku Corporation", powders of the carbonaceous materials prepared in Examples and Comparative Examples described later were each filled in a sample holder, and an X-ray diffraction pattern was obtained using a CuKα ray monochromatized with a Ni filter as a radiation source. The peak position in the diffraction pattern was determined by the centroid method (a method of determining a barycentric position of a diffraction line and determining a peak position at a 20 value corresponding to the barycentric position), and the peak position was corrected using the diffraction peak of the (111) plane of a high-purity silicon powder for a standard substance. The wavelength λ of the CuKα ray was set to 0.15418 nm, and $d_{002}$ was calculated using the following Bragg's equation.

[Expression 2]

$$d_{002} = \frac{\lambda}{2 \cdot \sin \theta} \quad \text{(Bragg's equation)}$$

(Particle size distribution determined by laser scattering method)

The average particle diameter (particle size distribution) of a carbonaceous material was measured by the following method. A sample (5 mg) was put into a 2 mL aqueous solution containing 5% by mass of a surfactant ("Toriton X100" manufactured by Wako Pure Chemical Industries, Ltd.), and treated with an ultrasonic cleaner for 10 minutes or more to disperse in the aqueous solution. Using the resulting dispersion, the particle size distribution was measured. The particle size distribution was measured using a particle size/particle size distribution analyzer ("Microtrac MT3300 EXII" manufactured by MicrotracBEL Corp.). $D_{50}$ is a particle size at which the cumulative volume is 50%, and this value was used as an average particle diameter. In addition, the particle size distribution index $D_{80}/D_{20}$ was calculated using the following equation, where the particle size at a cumulative volume of 80% was $D_{80}$ and the particle size at a cumulative volume of 20% was $D_{20}$.

Particle size distribution index $D_{80}/D_{20} = D_{80}/D_{20}$

(Degree of circularity)

The degree of circularity of a carbonaceous material was measured by the following method. A sample (5 mg) was put into a 2 mL aqueous solution containing 5% by mass of a surfactant ("Toriton X100" manufactured by Wako Pure Chemical Industries, Ltd.), and treated with an ultrasonic cleaner for 10 minutes or more to disperse in the aqueous solution. Using the resulting dispersion, a particle image projected on a two-dimensional plane was obtained using a flow type particle image analyzer ("PartAn SI" manufactured by MicrotracBEL Corp.). One particle image projected on the two-dimensional plane was selected, and the degree of circularity of the particle was calculated from the following formula: the degree of circularity = $(D/M)^2$ where the diameter of an equivalent circle having the same projected area as that of the particle was defined as D $\mu$m, and the length of the largest distance between two parallel lines sandwiching the particle image therewith was defined as M $\mu$m. The degree of circularity is calculated for each of 10,000 or more particle images projected on the two-dimensional plane and having a D within a range of 5 to 40 $\mu$m, and an average value of the results obtained is taken as the degree of circularity of the carbonaceous material.

(Raman spectrum)

Using a Raman spectrometer ("Laser Raman Microscope RAMANforce" manufactured by Nanophoton Corporation), particles to be measured as a carbonaceous material were set on an observation stage. The magnification of the objective lens was set to 20 times, focusing was performed, and measurement was performed while applying an argon ion laser beam. Details of the measurement conditions are as follows.

Wavelength of argon ion laser beam: 532 nm
Laser power on sample: 100-300 W/cm$^2$
Resolution: 5-7 cm$^{-1}$
Measurement range: 150-4000 cm$^{-1}$
Measurement mode: XY Averaging
Exposure time: 20 seconds
Number of integrations: 2
Peak intensity measurement: Baseline correction automatic correction with Polynom/third-order

Peak search and fitting process GaussLoren

(Example 1)

10 g of starch (corn starch), 1.16 g of melamine (0.15 mol with respect to 1 mol of a starch monosaccharide unit), 0.76 g of adipic acid (0.084 mol with respect to 1 mol of a starch monosaccharide unit), and 5 g of water were put in a plastic bag, and mixed by rubbing for 5 minutes. The raw material mixture obtained was immersed in a hot bath at 90°C, held for 2 hours, and then dried at 90°C with a vacuum dryer, whereby a gelatinized product (Step 1 and Step A) was obtained. The gelatinized product obtained was heated to 600°C in a nitrogen gas atmosphere. At this time, the rate of raising temperature to 600°C was set to 600°C/hour (10°C/min). Subsequently, carbonization treatment was carried out by performing heat treatment at 600°C for 30 minutes under a nitrogen gas stream, whereby a char was obtained (Step 2). At this time, the supply amount of nitrogen gas was 1 L/min per 10 g of the starch. Thereafter, the char obtained was pulverized with a ball mill, whereby pulverized chars respectively having a $D_{50}$ of 10 $\mu$m and a $D_{50}$ of 2.2 $\mu$m were obtained (Step 3). Next, the pulverized char having a $D_{50}$ of 10 $\mu$m and the pulverized char having a $D_{50}$ of 2.2 $\mu$m were placed in a 100 ml container at a mass ratio of 1:2, and mixed by shaking at 2 Hz for 5 minutes. The resulting char mixed after pulverization was heated to 1100°C and subjected to high temperature calcination treatment by performing heat treatment at 1100°C for 60 minutes, whereby a carbonaceous material was obtained (step 4). At this time, the rate of raising temperature to 1100°C was set to 600°C/hour (10°C/min). The raising temperature and the heat treatment were performed under a nitrogen gas flow. The supply amount of the nitrogen gas was 3 L/min per 5 g of the pulverized char.

(Example 2)

10 g of starch (wheat starch), 1.16 g of melamine (0.15 mol with respect to 1 mol of a starch monosaccharide unit), and 0.76 g of adipic acid (0.084 mol with respect to 1 mol of a starch monosaccharide unit) were put in a 100 ml vessel, and mixed by shaking at 2 Hz for 5 minutes (Step 1). The mixture obtained was heated to 600°C in a nitrogen gas atmosphere. At this time, the rate of raising temperature to 600°C was set to 600°C/hour (10°C/min). Subsequently, carbonization treatment was carried out by performing heat treatment at 600°C for 30 minutes under a nitrogen gas stream, whereby a char was obtained (Step 2). At this time, the supply amount of nitrogen gas was 1 L/min per 10 g of the starch. Thereafter, the char obtained was pulverized with a ball mill, whereby a pulverized char having a $D_{50}$ of 6 $\mu$m was obtained (Step 3). Next, Step 4 was performed in the same manner as in Example 1, whereby a carbonaceous material was obtained.

(Example 3)

10 g of starch (corn starch), 1.16 g of melamine (0.15 mol with respect to 1 mol of a starch monosaccharide unit), and 0.76 g of adipic acid (0.084 mol with respect to 1 mol of a starch monosaccharide unit) were put in a 100 ml vessel, and mixed by shaking at 2 Hz for 5 minutes (Step 1). The resulting mixture was shaken at 30 Hz for 1 hour with a ball mill, whereby a mechanically gelatinized product was obtained (Step A). The mechanically gelatinized product obtained was heated to 600°C in a nitrogen gas atmosphere. At this time, the rate of raising temperature to 600°C was set to 600°C/hour (10°C/min). Subsequently, carbonization treatment was carried out by performing heat treatment at 600°C for 30 minutes under a nitrogen gas stream, whereby a char was obtained (Step 2). At this time, the supply amount of nitrogen gas was 1 L/min per 10 g of the starch. Thereafter, Steps 3 and 4 were performed in the same manner as in Example 1, whereby a carbonaceous material was obtained.

(Example 4)

10 kg of starch (corn starch), 1.16 kg of melamine (0.15 mol with respect to 1 mol of a starch monosaccharide unit), and 4.3 kg of adipic acid (0.48 mol with respect to 1 mol of a starch monosaccharide unit) were put in a 90 L vessel, and mixed by rubbing for 5 minutes (Step 1). The mixed raw material was extruded with a twin-screw extruder (OMEGA 30H manufactured by STEEL) at 150°C and a rotation speed of 300 rpm, whereby a mechanically gelatinized product was obtained (Step A). Then, Step 2, Step 3, and Step 4 of the mechanically gelatinized product obtained were performed in the same manner as in Example 2, whereby a carbonaceous material was obtained.

(Example 5)

10 g of starch (corn starch), 1.16 g of melamine (0.15 mol with respect to 1 mol of a starch monosaccharide unit), and 0.76 g of adipic acid (0.084 mol with respect to 1 mol of a starch monosaccharide unit) were put in a 100 ml vessel, and mixed by shaking at 2 Hz for 5 minutes (Step 1). The mixture obtained was heated to 800°C in a nitrogen gas atmosphere. At this time, the rate of raising temperature to 800°C was set to 600°C/hour (10°C/min). Subsequently, carbonization treatment was carried out by performing heat treatment at 800°C for 30 minutes under a nitrogen gas stream, whereby a char was obtained (Step 2). At this time, the supply amount of nitrogen gas was 1 L/min per 10 g of the starch. Thereafter, the char obtained was pulverized with a ball mill, whereby pulverized chars respectively having a $D_{50}$ of 10 $\mu$m and a $D_{50}$ of 2.2 $\mu$m were obtained (Step 3). Next, the pulverized char having a $D_{50}$ of 10 $\mu$m, the pulverized char having a $D_{50}$ of 2.2 $\mu$m, and polystyrene (manufactured by Sekisui Kasei Co., Ltd., average particle diameter: 400 $\mu$m, residual carbon rate: 1.2% by mass) were put in a 100 ml container at a mass ratio of 1:2:0.3, and mixed by shaking at 2 Hz for 5 minutes. The resulting char mixed after pulverization was heated to 1100°C and subjected to high temperature calcination treatment by performing heat treatment at 1100°C for 60 minutes, whereby a carbonaceous material was obtained (step 4). At this time, the rate of raising temperature to 1100°C was set to 600°C/hour (10°C/min). The raising temperature and the heat treatment were performed under a nitrogen gas flow. The supply amount of the nitrogen gas was 3 L/min per 5 g of the pulverized char.

(Example 6)

21.0 kg of starch (corn starch), 2.43 kg of melamine (0.15 mol with respect to 1 mol of starch monosaccharide unit), and 1.39 kg of adipic acid (0.07 mol with respect to 1 mol of starch monosaccharide unit) were mixed in a 50 L conical ribbon blade reactor (manufactured by Okawara Mfg. Co., Ltd., RM-50VD) for 5 minutes (Step 1). The mixture obtained was heated to 225°C at an operation pressure of 12 kPaA while introducing nitrogen at 1 L/min, held as it was for 10 minutes, and then allowed to cool to 80°C or lower, whereby a treated product was obtained. Step 2 and Step 3 of the treated product obtained here were performed in the same manner as in Example 2, whereby a char mixed after pulverization was obtained. The resulting char mixed after pulverization was heated to 1000°C and subjected to high temperature calcination treatment by performing heat treatment at 1000°C for 60 minutes, whereby a carbonaceous material was obtained (step 4). At this time, the rate of raising temperature to 1000°C was set to 600°C/hour (10°C/min). The raising temperature and the heat treatment were performed under a nitrogen gas flow. The supply amount of the nitrogen gas was 3 L/min per 5 g of the pulverized char.

(Example 7)

10 g of starch (corn starch), 1.16 g of melamine (0.15 mol with respect to 1 mol of a starch monosaccharide unit), and 0.76 g of adipic acid (0.084 mol with respect to 1 mol of a starch monosaccharide unit) were put in a 100 ml vessel, and mixed by shaking at 2 Hz for 5 minutes (Step 1). The mixture obtained was heated to 400°C in a nitrogen gas atmosphere. At this time, the rate of raising temperature to 400°C was set to 600°C/hour (10°C/min). Subsequently, treatment was carried out by performing heat treatment at 400°C for 30 minutes under a nitrogen gas stream, whereby a treated product was obtained. Then, Step 2, Step 3, and Step 4 of the treated product obtained here were performed in the same manner as in Example 5 except that polystyrene was not added before Step 4, whereby a carbonaceous material was obtained.

(Comparative Example 1)

10 g of starch (corn starch) and 36 g of ammonium chloride (1.1 mol with respect to 1 mol of a starch monosaccharide unit) were put in a 100 ml vessel, and mixed by shaking at 2 Hz for 5 minutes. The mixture obtained was heated to 600°C in a nitrogen gas atmosphere. At this time, the rate of raising temperature to 600°C was set to 600°C/hour (10°C/min). Subsequently, carbonization treatment was carried out by performing heat treatment at 600°C for 60 minutes under a nitrogen gas stream, whereby a char was obtained. At this time, the supply amount of nitrogen gas was 1 L/min per 10 g of the starch. Thereafter, the char obtained was pulverized with a ball mill, whereby a pulverized char having a $D_{50}$ of 6 $\mu$m was obtained. Next, the pulverized char and polystyrene were placed in a 100 ml container at a mass ratio of 1:0.1, and mixed by shaking at 2 Hz for 5 minutes. The resulting char mixed after pulverization was heated to 1200°C and subjected to high temperature calcination treatment by performing heat treatment at 1200°C for 60 minutes, whereby a carbonaceous material was obtained. At this time, the rate of raising temperature to 1200°C was set to 600°C/hour (10°C/min). The raising temperature and the heat treatment were performed under a nitrogen gas flow. The supply amount of the nitrogen gas was 3 L/min per 5 g of the pulverized char.

(Comparative Example 2)

10 g of glucose and 3.3 g of ammonium chloride (1.1 mol with respect to 1 mol of the glucose) were put in a 100 ml vessel, and mixed by shaking at 2 Hz for 5 minutes. The mixture obtained was heated to 1000°C in a nitrogen gas atmosphere. At this time, the rate of raising temperature to 1000°C was set to 240°C/hour (4°C/min). Subsequently, carbonization treatment was carried out by performing heat treatment at 1000°C for 60 minutes under a nitrogen gas stream, whereby a char was obtained. At this time, the supply amount of nitrogen gas was 1 L/min per 5 g of the glucose. Thereafter, the mixture was pulverized with a ball mill, whereby a carbonaceous material was obtained.

(Comparative Example 3)

The char obtained in Comparative Example 1 was pulverized with a ball mill, whereby pulverized chars respectively having a $D_{50}$ of 10 $\mu$m and a $D_{50}$ of 2.2 $\mu$m were obtained. Next, the pulverized char having a $D_{50}$ of 10 $\mu$m, the pulverized char having a $D_{50}$ of 2.2 $\mu$m, and polystyrene were placed in a 100 ml container at a mass ratio of 1:2:0.3, and mixed by shaking at 2 Hz for 5 minutes. The resulting char mixed after pulverization was heated to 1200°C and subjected to high temperature calcination treatment by performing heat treatment at 1200°C for 60 minutes, whereby a carbonaceous material was obtained. At this time, the rate of raising temperature to 1200°C was set to 600°C/hour (10°C/min). The raising temperature and the heat treatment were performed under a nitrogen gas flow. The supply amount of the nitrogen gas was 3 L/min per 5 g of the pulverized char.

(Comparative Example 4)

To 100 g of coconut shell char (containing 98% by mass of particles having a particle size of 0.850 to 2.360 mm) obtained by crushing and dry-distilling a coconut shell at 500°C, nitrogen gas containing 1 vol% of hydrogen chloride gas was supplied at a flow rate of 10 L/min. The coconut shell char was treated at 950°C for 80 minutes, then only the supply of hydrogen chloride gas was stopped, and further heat treatment was performed at 950°C for 30 minutes.
Then, the treated coconut shell char was coarsely pulverized to a $D_{50}$ of 10 $\mu$m with Fine Mill SF5 (manufactured by Nippon Coke & Engineering Co., Ltd.), and then pulverized with a compact jet mill ("Co-Jet system $\alpha$-mkIII" manufactured by Seishin Enterprise Co., Ltd.). Further, classification was performed using Lab Classiel N-01 (manufactured by Seishin Enterprise Co., Ltd.), whereby carbon precursor A having a $D_{50}$ of 5.1 $\mu$m and carbon precursor B having a $D_{50}$ of 9.7 $\mu$m were obtained.
The obtained carbon precursor A having a $D_{50}$ of 5.1 $\mu$m was further pulverized with Fine Mill SF5 (manufactured by Nippon Coke & Engineering Co., Ltd.), whereby carbon precursor C having a $D_{50}$ of 2.1 $\mu$m was obtained.
0.9 g of polystyrene was mixed with 9.1 g of the carbon precursor C having a $D_{50}$ of 2.1 $\mu$m. 10 g of this mixture was put in a graphite sheath to have a sample layer thickness of approximately 3 mm, and placed in a high-speed heating furnace manufactured by Motoyama Co. Ltd. The rate of raising temperature from 600°C to 900°C was set to 20°C per minute (temperature raising time: 15 minutes) and 60°C per minute in other temperature ranges, under a nitrogen flow rate of 5 L per minute. The mixture was heated to 1050°C, then held at this temperature for 20 minutes, and then naturally cooled. It was confirmed that the temperature in the furnace was lowered to 200°C or lower, and the carbonaceous material was taken out from the furnace, whereby carbonaceous material C was obtained. The carbon precursor B having $D_{50}$ of 9.7 $\mu$m was also treated in the same manner as the carbon precursor C having $D_{50}$ of 2.1 $\mu$m, whereby carbonaceous material B was obtained. The carbonaceous material C and the carbonaceous material B were mixed at a mass ratio of 1:1, whereby a final carbonaceous material was obtained.

(Preparation of electrode)

Negative electrodes were prepared in accordance with the following procedure using the carbonaceous materials obtained in Examples and Comparative Examples, respectively.
95 parts by mass of a carbonaceous material, 2 parts by mass of conductive carbon black ("Super-P (registered trademark)" manufactured by TIMCAL), 1 part by mass of carboxymethyl cellulose (CMC), 2 parts by mass of styrene-butadiene rubber (SBR), and 90 parts by mass of water were mixed, whereby a slurry was obtained. The slurry obtained was applied to a copper foil having a thickness of 15 $\mu$m, dried, and then pressed, whereby an electrode having a diameter of 14 mm and a punched thickness of 45 $\mu$m was obtained.

(Electrode density)

The thickness of a negative electrode layer was a value calculated by subtracting the thickness of the copper foil after measuring the thickness of the produced electrode with a micrometer.
The volume of the negative electrode layer was a numerical value calculated by multiplying the thickness of the negative electrode layer obtained above by an electrode area calculated from a diameter of 14 mm.
The mass of the carbonaceous material in the negative electrode layer was a numerical value calculated by multiplying a numerical value obtained by subtracting the mass of the copper foil from the mass of the produced electrode by the ratio of the carbonaceous material in the material constituting the negative electrode layer.

The electrode density (g/cc) was defined as a numerical value (g/cc) calculated by dividing the mass (g) of the carbonaceous material in the negative electrode layer by the volume (cc) of the negative electrode layer.

(Discharge capacity per unit weight and discharge capacity per unit volume)

The electrode produced above was used as a working electrode, and metal lithium was used as a counter electrode and a reference electrode. Ethylene carbonate, dimethyl carbonate, and ethyl methyl carbonate were mixed at a volume ratio of 1:1:1, and the mixture was used as a solvent. In this solvent was dissolved 1 mol/L of $LiPF_6$, and the resulting solution was used as an electrolyte. A polypropylene film was used as a separator. A coin cell was fabricated in a glove box in an argon atmosphere.

For the lithium secondary battery having the configuration described above, a charge-discharge test was performed using a charge-discharge test apparatus ("TOSCAT" manufactured by Toyo System Co., Ltd.). The doping of lithium was performed at a rate of 70 mA/g with respect to the mass of the active material, and doping was performed until the potential reached 1 mV with respect to the lithium potential. Further, a constant voltage of 1 mV with respect to the lithium potential was applied for 8 hours to terminate the doping. The capacity at this time was defined as a charge capacity. Subsequently, dedoping was performed at a rate of 70 mA/g with respect to the mass of the active material until the potential reached 1.5 V with respect to the lithium potential, and the capacity discharged at this time was defined as a discharge capacity (mAh). The discharge capacity obtained was divided by the weight of the negative electrode, and the value obtained was taken as a discharge capacity per unit weight (mAh/g). The discharge capacity per unit weight was multiplied by the electrode density, and the value obtained was taken as a discharge capacity per unit volume (mAh/cc).

For the carbonaceous materials obtained in Examples and Comparative Examples, the results of measuring the nitrogen element content, the true density, the tapped bulk density, the carbon interplanar spacing ($d_{002}$), $D_{80}/D_{20}$, the degree of circularity, the half width of a peak around 1360 cm$^{-1}$, and the half width of a peak around 1650 cm$^{-1}$ in accordance with the measurement methods described above are given in Table 1. In addition, the electrode density, the discharge capacity per unit weight, and the discharge capacity per unit volume measured for the batteries obtained are given in Table 2.

The batteries manufactured using the carbonaceous materials of respective Examples exhibited a high discharge capacity per unit volume as well as a high discharge capacity per unit weight. On the other hand, with the batteries manufactured using the carbonaceous materials of respective Comparative Examples, which failed to have the prescribed nitrogen element content, true density, and tapped bulk density, both the discharge capacity per unit weight and the discharge capacity per unit volume were not sufficiently high.

[Table 1]

| | | Nitrogen element content [% by mass] | True density [g/cc] | Tapped bulk density [g/cc] | $d_{002}$ [Å] | $D_{80}/D_{20}$ | Degree of circularity | Half width | |
|---|---|---|---|---|---|---|---|---|---|
| | | | | | | | | 1360 cm$^{-1}$ | 1650 cm$^{-1}$ |
| Example | 1 | 2.61 | 1.56 | 0.90 | 3.74 | 6.87 | 0.73 | 270 | 103 |
| | 2 | 2.72 | 1.55 | 0.87 | 3.77 | 4.05 | 0.73 | 271 | 103 |
| | 3 | 2.78 | 1.59 | 0.72 | 3.71 | 9.26 | 0.73 | 274 | 104 |
| | 4 | 2.57 | 1.55 | 0.78 | 3.74 | 4.95 | 0.71 | 269 | 103 |
| | 5 | 2.62 | 1.58 | 0.75 | 3.74 | 7.49 | 0.73 | 271 | 103 |
| | 6 | 5.37 | 1.53 | 0.75 | 3.71 | 3.91 | 0.77 | 292 | 104 |
| | 7 | 2.30 | 1.55 | 0.76 | 3.83 | 7.80 | 0.73 | 258 | 102 |
| Comparative Example | 1 | 1.55 | 1.51 | 0.61 | 3.82 | 4.54 | 0.65 | 239 | 101 |
| | 2 | 3.88 | 1.49 | 0.68 | 3.72 | 4.11 | 0.67 | 269 | 103 |
| | 3 | 1.55 | 1.52 | 0.54 | 3.81 | 9.40 | 0.66 | 239 | 102 |
| | 4 | 0.61 | 1.50 | 0.71 | 3.87 | 8.01 | 0.71 | 214 | 98 |

[Table 2]

| | | Electrode density [g/cc] | Discharge capacity per unit weight [mAh/g] | Discharge capacity per unit volume [mAh/cc] |
|---|---|---|---|---|
| Example | 1 | 1.07 | 543 | 579 |
| | 2 | 1.05 | 549 | 575 |
| | 3 | 1.10 | 540 | 591 |
| | 4 | 1.01 | 537 | 542 |
| | 5 | 1.05 | 551 | 581 |
| | 6 | 1.05 | 545 | 572 |
| | 7 | 1.05 | 538 | 565 |
| Comparative Example | 1 | 0.94 | 513 | 481 |
| | 2 | 0.96 | 453 | 436 |
| | 3 | 1.00 | 509 | 508 |
| | 4 | 0.98 | 504 | 496 |

**Claims**

1. A carbonaceous material having a nitrogen element content determined by elemental analysis of 1.0% by mass or more, a true density determined by a butanol immersion method of 1.50 to 1.65 g/cc, a tapped bulk density of 0.7 to 1.0 g/cc, and a carbon interplanar spacing ($d_{002}$) measured by X-ray diffraction of 3.65 Å or more.

2. The carbonaceous material according to claim 1, wherein a ratio of $D_{80}$ to $D_{20}$ in a volume-based particle size distribution determined by a laser diffraction scattering particle size distribution measurement method, $D_{20}/D_{80}$, is 3.5 to 20.

3. The carbonaceous material according to claim 1 or 2, wherein a degree of circularity measured for particles with which a circle corresponding to a projected area determined with a flow type particle image analyzer is 5 μm or more is 0.70 or more.

4. The carbonaceous material according to any one of claims 1 to 3, wherein in a Raman spectrum observed by laser Raman spectroscopy, a value of a half width of a peak around 1360 cm$^{-1}$ is 240 cm$^{-1}$ or more.

5. The carbonaceous material according to any one of claims 1 to 4, wherein in a Raman spectrum observed by laser Raman spectroscopy, a value of a half width of a peak around 1650 cm$^{-1}$ is 98 cm$^{-1}$ or more.

6. The carbonaceous material according to any one of claims 1 to 5, which is a carbonaceous material for a negative electrode of a power storage device.

7. A negative electrode for a power storage device, comprising the carbonaceous material according to any one of claims 1 to 6.

8. A power storage device comprising the negative electrode for a power storage device according to claim 7.

9. A method for producing the carbonaceous material according to any one of claims 1 to 6, the method comprising at least the following steps:

(1) a step of mixing a compound having a saccharide skeleton, a nitrogen-containing compound, and a crosslinking agent to obtain a mixture;
(2) a step of subjecting the mixture to heat treatment at 500 to 900°C in an inert gas atmosphere to obtain a char;
(3) a step of pulverizing and/or classifying the char; and
(4) a step of subjecting the char pulverized and/or classified to heat treatment at 800 to 1600°C in an inert gas atmosphere to obtain a carbonaceous material.

10. The method for producing a carbonaceous material according to claim 9, wherein the compound having a saccharide skeleton is a compound with which in an image obtained by observing cross sections of particles of the compound with a secondary electron microscope, when 20 particles having a cross-sectional area of 3 $\mu m^2$ or more and 100 $\mu m^2$ or less are randomly selected, the number of particles having a void of 1 $\mu m^2$ or more is 3 or less.

11. The method for producing a carbonaceous material according to claim 9, further comprising a step (A) of gelatinizing the compound having a saccharide skeleton before, simultaneously with, or after the step (1) of mixing the compound having a saccharide skeleton, the nitrogen-containing compound, and the crosslinking agent to obtain a mixture.

12. The method for producing a carbonaceous material according to claim 11, wherein the step (A) is:

a step (a1) of, before the step (1), mixing a compound having a saccharide skeleton with water in an amount of 5 to 50% by mass based on the mass of the compound, and heating the mixture at a temperature of 50 to 200°C for 1 minute to 5 hours,
a step (b1) of, before the step (1), subjecting a compound having a saccharide skeleton to mechanical treatment having an action of impact, crushing, friction, and/or shearing,
a step (a2) of, simultaneously with or after the step (1), mixing a mixture comprising a compound having a saccharide skeleton with water in an amount of 5 to 50% by mass based on the mass of the compound having a saccharide skeleton and heating the mixture at a temperature of 50 to 200°C for 1 minute to 5 hours; and/or
a step (b2) of, simultaneously with or after the step (1), subjecting a mixture comprising a compound having a saccharide skeleton to mechanical treatment having an action of impact, crushing, friction and/or shearing.

## INTERNATIONAL SEARCH REPORT

| | International application No. |
|---|---|
| | **PCT/JP2022/028462** |

**A. CLASSIFICATION OF SUBJECT MATTER**

*C01B 32/00*(2017.01)i; *C01B 32/05*(2017.01)i; *H01M 4/587*(2010.01)i
FI: C01B32/00; H01M4/587; C01B32/05

According to International Patent Classification (IPC) or to both national classification and IPC

**B. FIELDS SEARCHED**

Minimum documentation searched (classification system followed by classification symbols)

C01B32/00 - 32/991; H01M4/587; H01G11/32

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JSTChina/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | CN 103094528 A (SHENZHEN BTR NEW ENERGY MATERIALS CO., LTD.) 08 May 2013 (2013-05-08) paragraphs [0001], [0060]-[0066], tables 1, 3, fig. 3 | 1-2, 4-8 |
| A | | 3, 9-12 |
| X | JP 2003-535803 A (INSTITUTE OF PHYSICS CHINESE ACADEMY OF SCIENCES) 02 December 2003 (2003-12-02) claims, paragraphs [0011], [0021], [0022], fig. 1(A), 1(B) | 1, 3, 6-8 |
| A | | 2, 4-5, 9-12 |
| X | JP 2013-534024 A (SHENZHEN BTR NEW ENERGY MATERIALS INC.) 29 August 2013 (2013-08-29) claims, tables 1-8 | 1-2, 6-8 |
| A | | 3-5, 9-12 |
| A | CN 102386384 A (SHENZHEN BTR NEW ENERGY TECHNOLOGY CO., LTD.) 21 March 2012 (2012-03-21) example 5 | 1-12 |

☑ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **16 September 2022** | **27 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2022/028462** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 101916857 A (SHENZHEN BTR NEW ENERGY MATERIAL CO., LTD.) 15 December 2010 (2010-12-15) <br> examples 1, 6 | 1-12 |
| A | JP 2014-130821 A (SHENZHEN BTR NEW ENERGY MATERIALS INC.) 10 July 2014 (2014-07-10) <br> example 7 | 1-12 |

Form PCT/ISA/210 (second sheet) (January 2015)

## INTERNATIONAL SEARCH REPORT
### Information on patent family members

International application No.

**PCT/JP2022/028462**

| Patent document cited in search report | | | Publication date (day/month/year) | Patent family member(s) | | | Publication date (day/month/year) |
|---|---|---|---|---|---|---|---|
| CN | 103094528 | A | 08 May 2013 | (Family: none) | | | |
| JP | 2003-535803 | A | 02 December 2003 | US | 2003/0157014 | A1 | |
| | | | | claims, paragraph [0012], example 3, fig. 1(A), 1(B) | | | |
| | | | | WO | 01/98209 | A1 | |
| | | | | EP | 1288160 | A1 | |
| | | | | CN | 1422235 | A | |
| JP | 2013-534024 | A | 29 August 2013 | WO | 2011/157013 | A1 | |
| | | | | examples 10, 19 | | | |
| | | | | CN | 101916845 | A | |
| | | | | CN | 101887966 | A | |
| | | | | KR | 10-2013-0030769 | A | |
| CN | 102386384 | A | 21 March 2012 | (Family: none) | | | |
| CN | 101916857 | A | 15 December 2010 | (Family: none) | | | |
| JP | 2014-130821 | A | 10 July 2014 | CN | 103050699 | A | |
| | | | | KR | 10-2014-0092754 | A | |

Form PCT/ISA/210 (patent family annex) (January 2015)

**EP 4 378 889 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006083012 A
- WO 2013118757 A
- WO 2019009332 A
- WO 2019009333 A
- JP 2012533864 A